(19) **Europäisches Patentamt**
**European Patent Office**
**Office européen des brevets**

(11) **EP 3 796 228 B1**

(12) **EUROPEAN PATENT SPECIFICATION**

(45) Date of publication and mention
of the grant of the patent:
**19.02.2025 Bulletin 2025/08**

(21) Application number: **19198520.9**

(22) Date of filing: **20.09.2019**

(51) International Patent Classification (IPC):
**G06N 3/088** (2023.01)     **G06N 3/045** (2023.01)
**G06N 3/047** (2023.01)

(52) Cooperative Patent Classification (CPC):
**G06N 3/088; G06N 3/045; G06N 3/047**

(54) **DEVICE AND METHOD FOR GENERATING A COUNTERFACTUAL DATA SAMPLE FOR A NEURAL NETWORK**

VORRICHTUNG UND VERFAHREN ZUR ERZEUGUNG EINER KONTRAFAKTISCHEN DATENPROBE FÜR EIN NEURONALES NETZWERK

DISPOSITIF ET PROCÉDÉ DE GÉNÉRATION D'UN ÉCHANTILLON DE DONNÉES CONTREFACTUELLES POUR UN RÉSEAU NEURONAL

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**24.03.2021 Bulletin 2021/12**

(73) Proprietor: **Robert Bosch GmbH**
**70442 Stuttgart (DE)**

(72) Inventor: **Munoz Delgado, Andres Mauricio**
**71263 Weil Der Stadt (DE)**

(56) References cited:
• SHUSEN LIU ET AL: "Generative Counterfactual Introspection for Explainable Deep Learning", ARXIV.ORG, CORNELL UNIVERSITY LIBRARY, 201 OLIN LIBRARY CORNELL UNIVERSITY ITHACA, NY 14853, 6 July 2019 (2019-07-06), XP081438755
• NEAL LAWRENCE ET AL: "Open Set Learning with Counterfactual Images", 6 October 2018, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 620 - 635, ISBN: 978-3-642-17318-9, XP047488217
• YASH GOYAL ET AL: "Counterfactual Visual Explanations", ARXIV.ORG, CORNELL UNIVERSITY LIBRARY, 201 OLIN LIBRARY CORNELL UNIVERSITY ITHACA, NY 14853, 16 April 2019 (2019-04-16), XP081370601
• CHUN-HAO CHANG ET AL: "Explaining Image Classifiers by Counterfactual Generation", ARXIV.ORG, CORNELL UNIVERSITY LIBRARY, 201 OLIN LIBRARY CORNELL UNIVERSITY ITHACA, NY 14853, 20 July 2018 (2018-07-20), XP081055868
• ALEX KENDALL ET AL: "What Uncertainties Do We Need in Bayesian Deep Learning for Computer Vision?", ARXIV.ORG, CORNELL UNIVERSITY LIBRARY, 201 OLIN LIBRARY CORNELL UNIVERSITY ITHACA, NY 14853, 15 March 2017 (2017-03-15), XP080756965

EP 3 796 228 B1

**Description**

The present disclosure relates to methods and devices for generating a counterfactual image data sample for a neural network.

Deep learning models using neural networks are becoming more and more widely used, however, before their deployment in the field, it is critical to understand how these models arrive at their results (predictions), especially when they are applied to high-risk tasks such as autonomous driving or medical diagnosis.

To understand a model, it is important to be able to quantitatively establish the degree to which it has learned the desired input-to-output relationship. However, deep learning models and techniques typically lack metrics and practices to measure this effect, and often produce models that are over-parametrized in comparison to the amount of data available. This is particularly true for models used for classification tasks, where the large number of model parameters allow for the decision boundary between object classes to grow increasingly complex and nonlinear. This often results in a wide gap between what a model has actually learned and what the implementer of the model thinks it has learned.

The method described in the paper "What Uncertainties Do We Need in Bayesian Deep Learning for Computer Vision?" by Alex Kendall and Yarin Gal gives an estimation for how certain a neural network is that its predictions are correct, and thus can help in assessing what the model/neural network has really learned.

The paper "Interpretable Explanations of Black Boxes by Meaningful Perturbation" by Ruth C. Fong and Andrea Vedaldi describes a method to increase the explainability of deep learning models. Such and similar approaches mostly focus on the task of image classification and produce saliency maps showing which parts/pixels of an image were most responsible for the classification by the neural network.

However, one significant problem in finding meaningful explanations is typically the existence of adversarial effects, which consist of small changes made to an input data sample that result in large changes in the classification score. These small changes, e.g. only a few pixels of an input image, are likely to not correlate to parts that represent semantic objects and thus are likely to not be helpful in explaining the classification score.

The paper "Generative Counterfactual Introspection for Explainable Deep Learning" by Shusen Liu et al., Cornell University Library, 201 Olin Library Cornell University Ithaca, NY 14853, July 6th 2019, discloses a method and apparatus to improve the understanding of causal relationships of class predictions, in particular to improve the understanding of how input data may be changed to produce an output closer to a target output. A generative counterfactual introspection framework is introduced, in which counterfactuals and counterfactual explanations for a given image classifier are generated using a Generative Adversarial Network, GAN.

The paper "Open Set Learning with Counterfactual Images" by Neal Lawrence et al, International Conference on financial cryptography and data security (lecture notes in computer science), Springer, Berlin, Heidelberg, pages 620-635, ISBN 978-3-642-17318-9, October 6th 2018, discloses open set learning with the help of counterfactual images, wherein open set learning is a classification task where the image classifier encounters unknown classes. A GAN is used to generate synthetic open set examples lying just outside of the known class boundaries, and these examples are added to the training dataset of the image classifier.

In view of the above, obtaining meaningful explanations for the results (predictions) of a deep learning model, in particular explanations that are descriptive of the model's decision boundary near a given input image data sample, is desirable. Furthermore, an indication of confidence in the reliability of the models results (predictions) is desirable.

The method and the device of the independent claims allow generating a counterfactual image data sample, providing meaningful explanations for the predictions of a neural network. This allows providing a measure of the reliability of the predictions of a neural network based on the difference between the counterfactual image data sample and the corresponding input image data sample. For a counterfactual generation device, the obtained explanations and measures of reliability of the class predictions from a neural network may further be used for the control of devices, such as the vehicle control for automated driving.

Further examples are described in the following:

A method for generating a counterfactual image data sample for a neural network based on an input image data sample may include determining, using the neural network, a class prediction for the input image data sample, determining, in addition to the class prediction, an estimate of the uncertainty of the class prediction, generating a candidate counterfactual image data sample for which the neural network determines a different class prediction than for the input image data sample, determining a loss function, wherein the loss function comprises the estimate of the uncertainty of the class prediction by the neural network for the candidate counterfactual image data sample, modifying the candidate counterfactual image data sample to obtain a counterfactual image data sample based on the determined loss function and outputting the counterfactual image data sample.

The method mentioned in this paragraph provides a first example.

Determining an estimate of the uncertainty of the class prediction and the addition of this estimate to the loss function has the effect of the generated counterfactual image data sample being less often an unwanted and/or not useful (to find explanations of the classification) data sample such as e.g. an adversarial. This means that the generated counterfactual image data sample will more often be a counterfactual data sample for which the network has a high confidence in its classification.

This enables to use the generated counterfactual data sample to find meaningful (understandable and/or plausible for a human being) explanations of the class prediction and/or to identify the root causes of the classification and/or to show to a user of the method which significant and meaningful changes are necessary for the neural network to change the classification score of a given input image data sample.

The method may include iteratively generating a sequence of candidate counterfactuals data samples, wherein, in each iteration, based on the determined loss function, the current candidate counterfactual is either modified to a subsequent candidate counterfactual or the current candidate counterfactual is accepted as the counterfactual data sample. The features mentioned in this paragraph in combination with the first example provide a second example. Iteratively determining the counterfactual data sample, e.g. with a multiplicity of iterations, allows finding a high-quality counterfactual data sample.

The method may include modifying the current candidate counterfactual to a subsequent candidate counterfactual if the determined loss function is above a predetermined threshold and accepting the current candidate counterfactual if the determined loss function is below a predetermined threshold. The features mentioned in this paragraph in combination with the first or second example provides a third example.

Stopping the iterative determination of the loss function even if the true minimum (optimum) of the loss function has not yet been found, but only a good approximation of it, ensures that the generation of the counterfactual data sample will stop after reasonable time.

It should be noted that usually the goal of the iterative determination of the loss function is to minimize the loss function, however in some cases, the goal might be to maximize the loss function.

In case the goal of the iterative determination of the loss function is to maximize the loss function, the method may include modifying the current candidate counterfactual to a subsequent candidate counterfactual if the determined loss function is under a predetermined threshold and accepting the current candidate counterfactual if the determined loss function is above a predetermined threshold.

The method includes that the loss function comprises (at least) a first term containing the output of the neural network for the input image data sample and a second term containing the estimate of the uncertainty of the class prediction. The features mentioned in this paragraph in combination with any one of the first example to third example provide a fourth example.

The method includes that the loss function further contains a term representative of the difference between the input image data sample and the counterfactual image data sample. The features mentioned in this paragraph in combination with any one of the first example to fourth example provide a fifth example.

Knowing the difference between the input image data sample and the counterfactual image data sample allows finding "minimal" counterfactuals, i.e. differing from the input image data sample as little as possible. This allows the counterfactual data sample to be near to the decision boundary and thus allows precise examination of the decision boundary and/or to improve the decision boundary when the generated counterfactual data samples are used for further training.

The method includes that the loss function further contains a term indicating a target class for the counterfactual data sample to be generated by the neural network. The features mentioned in this paragraph in combination with any one of the first example to fifth example provide a sixth example.

Indicating a target class for the counterfactual data sample enables to force the counterfactual data sample to be classified by the neural network with the wanted/specific target class. This is useful to examine how the neural network differentiates between specific classes. In particular, the target class for the counterfactual data sample may be close (for a human) to the class of the input image data sample, e.g. the class of the input image data sample may be a bicycle and the target class of the counterfactual data sample may be a motorcycle.

The method may include modifying the candidate counterfactual data sample based on gradient descent of the loss function. The features mentioned in this paragraph in combination with any one of the first example to sixth example provide a seventh example.

The method includes that generating the candidate counterfactual data sample comprises applying a mask to the input image data sample and wherein modifying the candidate counterfactual data sample comprises modifying the mask. The features mentioned in this paragraph in combination with any one of the first example to seventh example provide an eighth example.

Using a mask as basis for the counterfactual generation process has the advantage of being to output saliency maps highlighting the parts of the input image data sample, e.g. the pixels of an input image, most responsible for a change in classification (score). The mask applied to the input image data sample may in particular be chosen in such a way that the perturbations causing a change in classification have certain features, e.g. are small, blob-like, reduce image artefacts, etc.

The method may include generating the candidate counterfactual data sample by means of a Generative Adversarial Network, GAN, wherein modifying the candidate counterfactual data sample includes modifying an input of the Generative Adversarial Network, GAN. The features mentioned in this paragraph in combination with any one of the first example to eighth example provide a ninth example.

The application of the method for images may for example allow object classification for autonomous driving or visual inspection systems. In particular, it may allow finding meaningful explanations for the object classification for autonomous driving and visual inspections systems.

The method may include that the neural network is a Bayesian Neural Network, BNN, wherein the estimate of the uncertainty is derived from the predictive uncertainty induced by the weight probability distributions of the BNN. The features mentioned in this paragraph in combination with any one of the first example to tenth example provide an eleventh example.

Using a BNN as the neural network which classifies the input image data samples enables to capture (at least a part of) the uncertainty contained in the class predictions, since they are no longer point estimates but distributions. Furthermore, using a BNN enables the use of uncertainty measures based on this induced predictive uncertainty.

The method may include determining the difference between the input image data sample and the counterfactual data sample, storing the determined difference between the input image data sample and the counterfactual data sample in a storage and controlling a device based on at least the stored difference. The features mentioned in this paragraph in combination with any one of the first example to eleventh example provide a twelfth example.

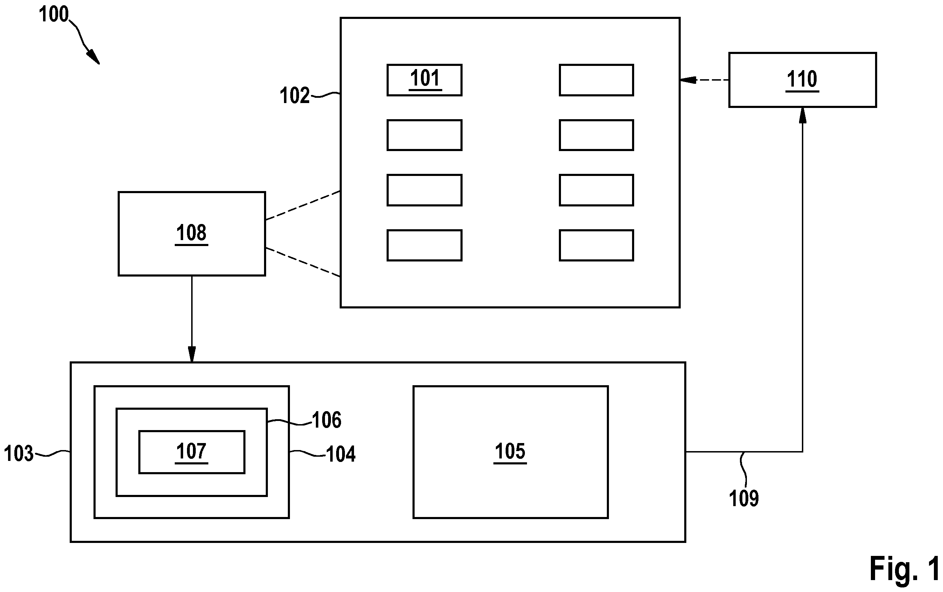

Based on the stored difference between the input image data sample and the counterfactual data sample a controller of a device is able to determine what would need to be modified for the neural network to change the classification of an input image data sample with a high degree of confidence. For example, in a manufacturing process/system such as the one illustrated in figure 1 with a (visual) inspection system component that relies on a learned model prediction, the control parameters of the manufacturing process may be adjusted after taking into account why samples (parts) have been classified as "Not OK". The stored difference further enables to detect unexpected or critical anomalies. In cases where such anomalies are detected, the controller may e.g. stop the manufacturing process, put the process in a safe mode, prompt a human operator to take over control, etc.

A method for determining the reliability of class predictions determined for two or more input image data samples using a neural network may include generating for each input image data sample a counterfactual data sample according to any one of the first to the twelfth example, determining for each input sample a difference between the input image data sample and the corresponding counterfactual data sample, computing at least one statistical information for the determined differences between the input image data samples and the counterfactual data samples, comparing the at least one statistical information against at least one predefined criterion and determining a reliability of class predictions by the neural network based on a result of the comparison. The features mentioned in this paragraph in combination with any one of the first example to twelfth example provide a thirteenth example.

The method of the thirteenth example provides a safe way to determine how much "energy" (or "work") was required for a model to classify a given input differently, and by computing statistics such as mean and variance over the "energy" required to modify several input sensor data samples into counterfactual data samples and comparing it to previously defined thresholds, it enables to find out potential input image data samples that have been mislabeled/misclassified or where the network is unsure about the classification.

For example, if the amount of "energy" necessary to modify an input sensor data sample is significantly lower than the expected (mean) amount of "energy" required to modify input sensor data samples into counterfactual data samples, the generated counterfactual data sample may be an adversarial. In such a case, the generated counterfactual data sample may be discarded and/or the input image data sample may be labeled as being (potentially) misclassified. Furthermore, depending on the amount of "energy" required for the misclassification of an input image data sample, a system may automatically flag input image data samples that are potentially mislabeled.

This method can thus in particular be used in a verification and validation process of a system using a neural network to classify input image data samples.

A method for training a neural network may include providing training image data samples of a training dataset, training the neural network with the training dataset, generating one or more counterfactuals according to any one of the first to the eleventh example, adding the one or more generated counterfactuals to the training dataset to obtain an augmented training dataset and training the neural network and/or another neural network with the augmented training dataset. The features mentioned in this paragraph in combination with any one of the first example to thirteenth example provide a fourteenth example.

The method of the fourteenth example enables to refine the existing model/dataset to obtain a better trained and more robust neural network, or to train a new model/neural network from scratch. In particular, in case a decision boundary of the original model is highly nonlinear near the input image data sample (indicating possibly a misclassified sample), the newly generated counterfactual data samples used as additional data samples in the augmented training dataset will help smoothen the decision boundary.

The method for determining the reliability of class predictions may include that the input image data samples and the counterfactual data samples are data arrays comprising individual data elements and that the difference between an input image data sample and a corresponding counterfactual data sample is a sum of differences between data elements of the input image data sample and elements of the corresponding counterfactual data sample.

The features mentioned in this paragraph in combination with the fourteenth example provide a fifteenth example.

The method for determining the reliability of class predictions may include that the at least one predefined criterion is a predefined threshold. The features mentioned in this paragraph in combination with the fourteenth or fifteenth example provide a sixteenth example.

The method for determining the reliability of class predictions may include that an alarm signal is output when the at least one predefined criterion is not met. The features mentioned in this paragraph in combination with any one of the fourteenth to sixteenth example provide a seventeenth example.

A counterfactual generation device may be configured to perform a method of any one of the first example to seventeenth example. The device mentioned in this paragraph provides an eighteenth example.

A vehicle may include at least one sensor providing an input image data sample and a driving assistance system configured to generate counterfactual data samples according to any one of the first to the seventeenth example, wherein the driving assistance system is configured to control the vehicle based on a difference between the at least one input image data sample and the generated counterfactual data sample. The features mentioned in this paragraph provide a nineteenth example.

The vehicle may include that controlling the vehicle comprises controlling an actuator of the vehicle. The features mentioned in this paragraph in combination with the nineteenth example provide a twentieth example.

The vehicle includes that the input sensor data sample is an image and that controlling the vehicle based on the difference between the input sensor data sample and the counterfactual data sample includes determining whether the difference semantically corresponds to the class prediction for the image. The features mentioned in this paragraph in combination with the nineteenth or twentieth example provide a twenty-first example.

A computer program may have program instructions that are configured to, when executed by one or more processors, to make the one or more processors perform the method according to one or more of the first example to seventeenth example.

The computer program may be stored in a machine-readable storage medium.

The method according to one or more of the first example to seventeenth example may be a computer-implemented method.

In the drawings, like reference characters generally refer to the same parts throughout the different views. The drawings are not necessarily to scale, emphasis instead generally being placed upon illustrating the principles of the invention. In the following description, various aspects are described with reference to the following drawings, in which:

Figure 1    shows an exemplary manufacturing system for the detection of defective parts.
Figure 2    shows an example of object classification in the context of autonomous driving.
Figure 3    shows an example of a neural network.
Figure 4    shows a counterfactual generation arrangement.
Figure 5    shows a flow diagram illustrating an exemplary method for determining the reliability of results output by a neural network.
Figure 6    shows a flow diagram illustrating an exemplary method for generating a counterfactual data sample using a neural network.

The following detailed description refers to the accompanying drawings that show, by way of illustration, specific details and aspects of this disclosure in which the invention may be practiced. Other aspects may be utilized and structural, logical, and electrical changes may be made without departing from the scope of the invention. , which is defined in the appended claims. The various aspects of this disclosure are not necessarily mutually exclusive, as some aspects of this disclosure can be combined with one or more other aspects of this disclosure to form new aspects.

In the following, various examples will be described in more detail.

Figure 1 shows a manufacturing system 100 illustrating an example for the detection of defective parts.

In the example of figure 1, parts 101 are positioned on an assembly line 102.

A controller 103 includes data processing components, e.g. a processor (e.g. a CPU (central processing unit)) 104 and a memory 105 for storing control software according to which the controller 103 operates, and data on which the processor 104 operates.

In this example, the stored control software comprises instructions that, when executed by the processor 104, make the processor 104 implement an inspection system 106, which includes a counterfactual generation system and contains a neural network 107 (or possibly a plurality of neural networks 107).

The input data samples can be formed by data arrays, wherein each data array includes a plurality of individual data elements.

A counterfactual data sample is a generated data sample, which has a different classification than the corresponding input data sample (when classified by neural network 107) and/or a significantly different classification score (e.g. the classification score drops below a predetermined threshold) than the corresponding input data sample.

The data stored in memory 105 may for example include image data from one or more image sources 108, e.g. cameras. An image can include a collection of data representing one or more objects or patterns. The one or more image sources 108 may for example output one or more greyscale or color pictures of each of the parts 101. The one or more image sources 108 may be responsive to visible light or non-visible light such as e.g. infrared or ultraviolet light, ultrasonic or radar waves, or other electromagnetic or sonic signals.

The image data is classified by the neural network 107. The counterfactual generation system contained in the inspection system 106 provides an estimation of how reliable the classification by the neural network 107 is.

It should be noted that the classification of an image may be regarded to be equivalent to the classification of an object shown in the image. If an original image shows multiple objects or patterns, a segmentation may be performed (possibly by another neural network) such that each segment shows one object or pattern, and the segments are used as input to an image classifying neural network.

The controller 103 may determine that one of the parts 101 is defective based on the image data from the one or more image sources 108. For example, the neural network 107 classifies a part as "OK" if it meets all quality criteria, else, if a part fails at least one quality criterion, it is classified as "Not OK".

The inspection system 106 can further provide an explanation for a "Not OK" classification of a part 101. The explanation can be constrained, by design, to a discrete set of possibilities, e.g. a physical defect in a specific location of the part or a change in the control conditions, such as lighting during the manufacturing process etc.

In case controller 103 has determined a part 101 to be defective, it may send a feedback signal 109 to an error-handling module 110. The feedback signal 109 contains the explanation, i.e. information representative of reasons (such as features of the part), why the part 101 has been determined to be defective,

Error-handling module 110 can then use the feedback signal 109 to adapt the manufacturing system/process accordingly. For example, the explanation shows that the part has a particular physical defect in a specific location. In this case, error-handling module 110 may modify the operating parameters of the manufacturing process, such as e.g. applied pressure, heat, weld time etc. to reduce the risk of such failures. This adaptation of the operating parameters of the manufacturing process in response to a defective part can be seen as being similar to a reinforcement learning approach.

In case the explanation produced by the inspection system 106 is e.g. unexpected or critical according to predefined (or/and user-defined) criteria, error-handling module 110 after receiving the feedback signal 109 may control the system (manufacturing process) to operate in a safe mode.

Furthermore, the explanations may be used to determine how a "Not OK" image would have to be modified in order for the neural network 107 to classify it as "OK". This information can then be used to generate new data samples that may be incorporated into a future training dataset to refine the used deep learning model which is based on the one or more neural networks (or to train another model). The counterfactual data samples generated by the counterfactual generation system contained in inspection system 106 may also be added to a future training dataset to refine the used deep learning model.

It should be noted that this "OK" / "Not OK" classification used to provide the explanations is just one concrete example where the counterfactual generation system can be helpful. Other examples include the semantic segmentation of complex scenes, standard object classification, scene recognition, etc.

Additionally to the system illustrated by figure 1, a machine learning system may be trained by learning the correspondence between an explanation and an operating parameter setting to learn optimal operating parameter settings for the manufacturing system/process.

A similar system as the one illustrated in figure 1 could be used in other technical fields, e.g. in an access control system, a computer-controlled machine such as a robot, a domestic appliance, a power tool or a personal assistant.

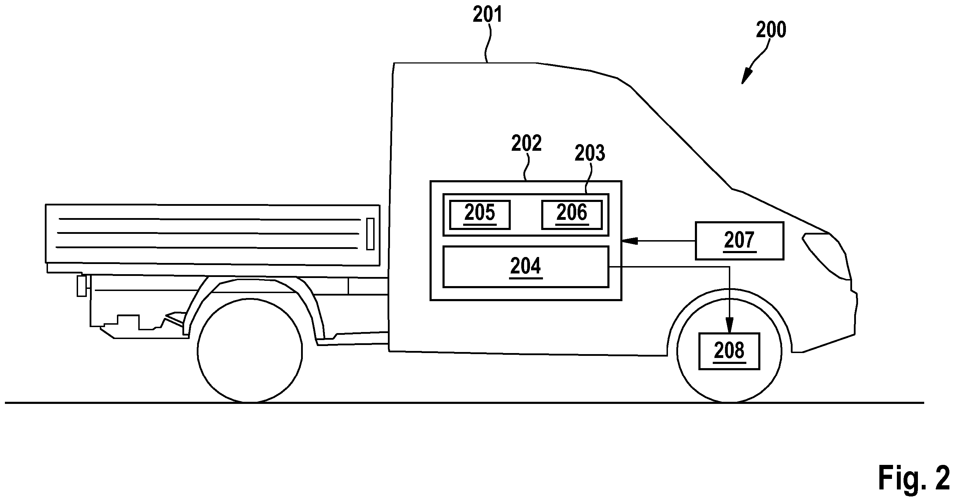

Figure 2 shows an example 200 for object detection in an autonomous driving scenario.

In the example of figure 2, a vehicle 201, for example a car, van or motorcycle is provided with a vehicle controller 202.

The vehicle controller 202 includes data processing components, e.g. a processor (e.g. a CPU (central processing unit)) 203 and a memory 204 for storing control software according to which the vehicle controller 202 operates and data on which the processor 203 operates.

For example, the stored control software comprises instructions that, when executed by the processor 203, make the processor implement a counterfactual generation system 205 and a neural network 206 (or possibly a plurality of neural networks 206).

The data stored in memory 204 can include input sensor data from one or more sensors 207. For example, the one or more sensors 207 may be one or more cameras acquiring images. An image can include a collection of data representing one or more objects or patterns. The one or more sensors (cameras) 207 may for example output greyscale or color pictures of the vehicle's environment. The one or more sensors 207 may be responsive to visible light or non-visible light such as e.g. infrared or ultraviolet light, ultrasonic or radar waves, or other electromagnetic or sonic signals. For example, sensor 207 may output radar sensor data that measures the distance from objects in the front and/or the back of the vehicle 201.

The neural network 206 may determine the presence of objects, e.g. fixed objects, such as traffic signs or road markings, and/or moving objects, such as pedestrians, animals and other vehicles, based on the input sensor data, e.g. image data.

The counterfactual generation system 205 may provide a counterfactual data sample for the input images, in particular for each of the determined objects. A counterfactual data sample is a generated data sample, which has a different classification than the corresponding input data sample (when classified by neural network 206) and/or a significantly different classification score (e.g. the classification score drops below a predetermined threshold) than the corresponding input data sample.

The generated counterfactual data samples may be data arrays, wherein each data array includes a plurality of individual data elements. In particular, a counterfactual data sample may be a generated image having a small, preferably the smallest possible, amount of differences with the corresponding input data sample while having a different classification.

The difference between a counterfactual data sample and the associated input data sample may be expressed in the form of a saliency map (in accordance with a saliency representation method). A saliency map may explain the predictions (classification) of a neural network by highlighting parts of the input data sample that presumably have a high relevance for the predictions, i.e. by identifying the image pixels that contribute the most to the neural network prediction.

The vehicle 201 may be controlled by the vehicle controller 202 in accordance with the determination of the presence of objects and of the generated counterfactuals (as short for counterfactual data samples) and/or of the corresponding saliency maps. For example, the vehicle controller 202 may control an actuator 208 to control the vehicle's speed, e.g. to actuate the brakes of the vehicle or may prompt a human driver to take over control of the vehicle 201.

In case the neural network 206 detects an object in the input image received from the one or more sensors 207, but the corresponding saliency map highlights parts of the image that are not semantically associated with said object, the object determination of the neural network 206 is determined as being unreliable. For example, in case the neural network determines that an object in the vicinity of the vehicle 201 is a bus, but the corresponding saliency map highlights parts of the image for the classification of the object that are not associated with a bus, e.g. a traffic sign, another vehicle or the sky, then the object identified as a bus is considered to not have been reliably classified.

In such a case, i.e. when the classification of an object has been determined as unreliable, controller 202 may request a new image from the one or more image sensors 207 or may activate an emergency procedure, e.g. stopping the vehicle 201 by actuating the brakes of the vehicle, or may prompt a human driver to take over control of the vehicle.

As mentioned in the examples of control systems illustrated by figures 1 and 2, the control is performed on the basis of an object classification performed by a neural network (or possibly a plurality of neural networks).

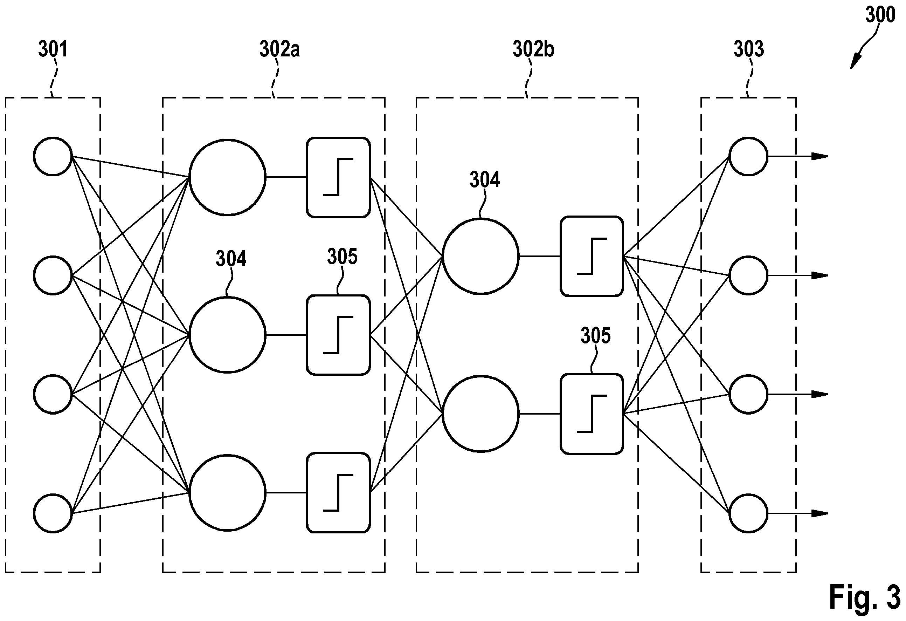

Figure 3 shows an example of a neural network 300 that can be used to classify input image data into a predefined number of classes.

In this example, the neural network 300 includes one input layer 301, two hidden layers 302a and 302b and one output layer 303.

It should be noted that the neural network 300 is a simplified example of an actual deep neural network, e.g. a deep feed forward neural network, used for classification purposes, which may include many more processing nodes and layers.

The input data corresponds to the input layer 301 and can generally be seen as a multidimensional array of values, e.g. an input image can be seen as a 2-dimensional array of individual values corresponding to the pixel values of the image.

The inputs from the input layer 301 are then connected to processing nodes 304. A typical node 304 multiplies each input with a weight and sums the weighted values up. Additionally, a node 304 may add a bias to the sum. The weights may be provided as a distribution, e.g. a Gaussian distribution, with a learned mean and variance. In such a case, the neural network is called a Bayesian neural network, BNN.

The nodes 304 are typically each followed by a non-linear activation function 305, e.g. Rectified Linear Unit, ReLU ($f(x) = \max(0, x)$) or a sigmoid function ($f(x) = 1/(1 + \exp(-x))$). The resulting value is usually input to the next layer.

Hidden layers 302a and 302b may be fully connected layers, as shown in figure 3, where every node of one layer is connected to every node of another layer.

The hidden layers may also be (or be supplemented by) non-fully connected layers, e.g. convolutional or pooling layers in case of a convolutional neural network, recurrent layers or self-attention layers.

In a neural network designed for classification such as neural network 300, the output layer 303 receives values from at least one of the preceding hidden layers, e.g. from hidden layer 302b. These values may then be turned into probabilities by the output layer, e.g. by applying the softmax function $f(x) = \frac{\exp(v_i)}{\sum_{k=1}^{K} exp(v_k)}$, where $v_i$, i = 1,...,K, are the values received by the output layer) or the sigmoid function on them. The highest probability value contained in an output vector corresponds to a class prediction.

In the following, class predictions may also be referred to as predictions, predicted class labels or predicted classification labels.

An output vector of output layer 303 is thus a probability vector indicating, for each of the pre-defined classes, the probability that the input sensor data sample corresponds to the predefined class, e.g. that it shows a predefined object. For example, assuming there are 10 predefined classes (0, 1,..., 9) for the input image of a digit, the output vector is a vector consisting of 10 elements where each element corresponds to the probability for a digit. The class prediction will be the digit corresponding to the highest probability in the output vector. The output layer 303 may output the entire vector consisting of probability values, or only output the class prediction.

It should be noted that in the case of a BNN, the output predictions of the neural network are distributions rather than individual (floating point) numbers.

In order for the neural network 300 to be able to classify input image data, it is first trained accordingly based on input training (image) data.

A core issue when using deep learning models, which include deep neural networks, for the task of classification is that it is difficult to explain how a neural network reaches its classification outputs. This is particularly true when a large number of model parameters allow for the decision boundary between objects classes to grow increasingly complex and nonlinear.

Predictions for input samples that are mapped close to a decision boundary are not as trustworthy as predictions further away from a decision boundary. Assuming that the input samples follow a distribution near a heavily nonlinear boundary, the amount of "energy" (i.e. the amount of "work" or the total difference) necessary to change the prediction for an input sample is less than if the decision boundary was smooth and less tailored to the sample distribution. This amount of "energy" or "work" necessary to change the prediction for an input sample can be represented by e.g. the total number of (pixel) changes/edits to the input sample required to move the sample across the decision boundary, i.e. change its classification. Low "energy" expresses a small, required change in the input sample in order for the neural network to change its classification.

In a manufacturing system such as the one illustrated in figure 1, it is important to have high confidence and trust in the classification of parts as "OK"/ "Not OK", and therefore, it may be required that the deep learning model provides reasons for its classification in the form of an explanation that is intelligible to and/or reasonable for a human operator.

These explanations are usually in the form of visual explanations, such as saliency maps, highlighting which parts of an image are the most important for the neural network to obtain its classification prediction. Ideally, the pixels most responsible for the classification prediction should correlate to parts of the image that represent semantic objects or parts, i.e. should correlate to parts of the image where a human operator would also look when determining what objects are on the image.

The generation of counterfactuals, which are data samples having a different classification than the input samples they are based on, can be used as a way of providing better explanations for the neural network/model predictions. Counterfactuals can be used to explore the causality between the input and the output of a given model. In more details, counterfactuals can be designed to investigate the causality in model behaviour in the form of "if X does not occur, then Y would not occur" or alternatively, "if Y occurs, then it is implied that X has occurred". This is done by analysing the "energy" necessary to generate a counterfactual to a corresponding input data sample. For example, in a manufacturing system such as the one illustrated in figure 1, X could be interpreted as "part has a defect" and Y as "part has been classified as Not OK".

In practice, one problem of using counterfactuals to increase the explainability of the predictions of a neural network is the existence of adversarial effects, which are small changes made to the input data samples that result in large changes in the classification (score).

In terms of the boundary depiction, these adversarial effects can be interpreted as shortcuts taken by the counterfactual generation process. It is likely not useful for a human operator to observe on a saliency map that changing a couple of random pixels caused the neural network to change its classification. To understand a model's predictions and to be able to verify and validate the model, it is important that the explanations are meaningful, i.e. that the pixels most responsible for the change in the classification (score) correlate to parts of the image that represent semantic objects or parts, i.e. parts of the image that a human operator would also likely look at when classifying the objects. However, the more complex the model, the more unlikely it is that the explanations will be meaningful and/or understandable by a human operator, and the more likely it is that adversarial effects are the reason for the change in classification (score).

It is therefore desirable to generate counterfactuals that avoid adversarial effects, and which therefore provide meaningful explanations that are descriptive of the model's decision boundary near a given input sample.

According to an embodiment, a counterfactual generation method and system are provided, which allow adversarial effects to be reduced/mitigated by employing an uncertainty regularizing term to a counterfactual generator.

According to a further embodiment, a method of training a neural network is provided, which allows adding the counterfactual data samples, generated by the provided counterfactual generation method and system, to a training dataset, which allows making the neural network more robust and to smooth (highly) nonlinear decision boundaries near the input sensor data sample.

In the following, the counterfactual generation process is explained with image data.

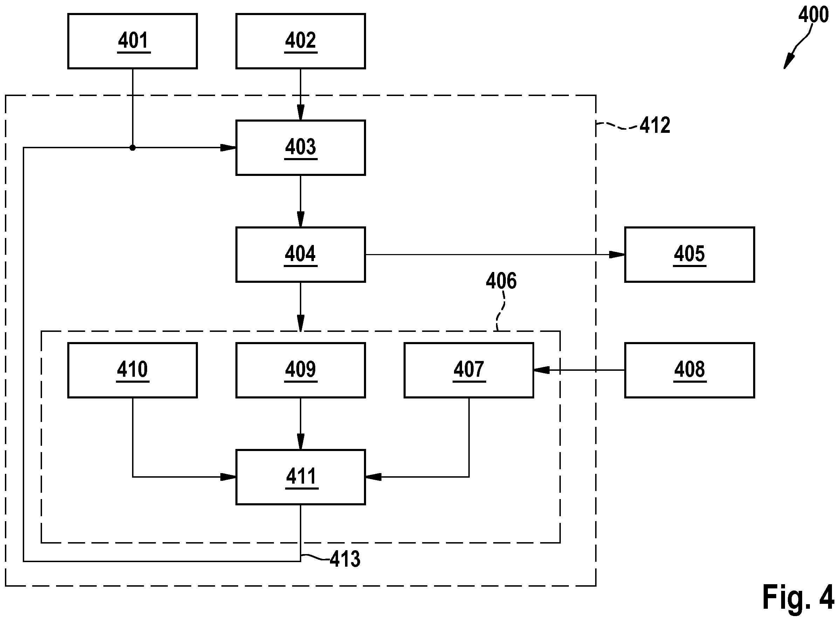

Figure 4 shows a counterfactual generation arrangement 400 according to an embodiment. The counterfactual generation arrangement 400 comprises a (deep learning) classification model 401, in the following a neural network, e.g. corresponding to neural network 300, and input data samples 402, in the following input images, for the model 401. The input data samples 402 are e.g. provided by one or more sensors, in the following an image sensor.

The input images 402 are classified by the neural network 401, which outputs a classification O for each of the input images.

The counterfactual generation arrangement 400 implements a counterfactual (data) generation process 403 that generates counterfactuals, i.e. generates data samples with classifications O' which are different from the classifications O of the corresponding input images 402. Explanations for the local behaviour of the classification model 401 given input images 402 are derived by subjecting the input images to the counterfactual generation process 403 and assessing the causal effect on O.

In the following, an exemplary counterfactual generation process 403 is described. Note that many other types of data (counterfactual) generation processes, e.g. a process modelled with the help of a Generative Adversarial Network, GAN, may be used to construct the counterfactuals.

Let $f: X \to Y$ denote the prediction function, e.g. implemented by neural network 401, which maps an input space X to an output space Y.

In this example, the counterfactual generation process 403 is a process during which a mask m: $X \to [0,1]$ is refined. The mask $m$ has the same size as the input image and outputs elements in the [0,1] range. The mask $m$ is applied to one of the input images 402 (for which a counterfactual is to be generated) in every iteration of the counterfactual generation process 403, resulting in a perturbed image, associating to each pixel $u \in X$ a scalar value $m(u)$.

The pixel value $u$ of the perturbed image for mask $m$ and input image $x_0$ is given as follows:

$$\Phi(x_0; m)(u) = m(u)x_0(u) + \big(1 - m(u)\big)\eta(u) \tag{1}$$

where $\eta(u)$ is a function representing the perturbation. For example, $\eta(u)$ can be independent and identically distributed (i.i.d.) Gaussian noise samples for each pixel, a fixed colour, saltand-pepper noise, a colour desaturation, a local affine transformation etc.

For a given pixel $u$, if the mask at that pixel is equal to one, then the original image is displayed at that pixel. If the mask value is zero, then the pixel value of a pre-selected perturbation target is displayed. The perturbation target is chosen a priori and represents the "rules" according to which the image may be modified. For example, if an all-black image is chosen as perturbation target, then the process P will try to add black pixels to the original input image I. The mask $m$ interpolates between the two extreme values of zero and one.

The counterfactual generation process 403 generates a first candidate counterfactual 404 using a simple, unrefined mask, e.g. a random mask, a default mask or random inputs in the case a GAN is used to generate the counterfactuals.

A goal of the counterfactual generation system 412 is to find the smallest mask $m$ that causes the classification score $f_c(\Phi(x_0; m)) \ll f_c(x_0)$ to drop significantly, where $c$ is the class of the input data sample and $f_c(x)$ refers to the output classification score of input $x$ for class $c$ in the output layer.

It is desirable for the mask m to have further proprieties, e.g. to be blob-like, which is for example helpful for images in dense scene recognition. Ideally, the mask should also not depend too much on local image artefacts.

Taking all of this into consideration, finding a suitable mask m can for example be formulated as the following optimization problem:

$$m^* = \underset{m \in [0,1]^X}{\operatorname{argmin}} \lambda_1 \parallel 1 - m \parallel_1 + f_c\big(\Phi(x_0; m)\big) + \lambda_2 \sum_{u \in X} \parallel \nabla m(u) \parallel_\beta^\beta +$$

$$\mathbb{E}_\tau\big[f_c\big(\Phi(x_0(.-\tau), m)\big)\big] \tag{2}$$

In the present context, it should be noted that optimization is understood as being based on an optimization for a certain period of time or for a certain number of iterations. The above optimization problem may thus be only approximately solved, e.g. via stochastic gradient descent.

In the above equation (2), $\lambda_1$ encourages most of the mask to be turned off, i.e. only a small subset of the input image $x_0$ is deleted. The second term of equation (2) forces the mask to change its classification score with respect to the input and the third term of equation (2) has the effect to render the mask more blob-like by regularizing it using the total variation norm. Finally, with the fourth term of equation (2) the mask is computed as an average over jittered versions of the original input image, thus avoiding it depending too much on local image artefacts.

However, for a data generation process 403 using an optimization problem such as the one described by equation (2), unwanted masks/counterfactuals, in particular adversarial masks still remain a problem, despite the first and third term of equation (2). That is to say, the masks returned by the data generation process 403 often represent adversarial masks that do not correspond to semantic objects comprehensible to a human operator.

Therefore, in the present example, to avoid unwanted/adversarial masks, the mask m is determined by solving a minimization problem for a total loss function $\mathcal{L}_{total}$ 411. The minimization problem can for example be formulated as:

$$\text{m*} = \text{argmin } \mathcal{L}_{total} \tag{3}$$

Thus, in each iteration, m* should be smaller than in the previous iterations.

It should be noted that minimization is understood as being based on a minimization for a certain period of time or for a certain number of iterations. The above minimization problem may thus be only approximately solved.

The total loss function 411 is computed in system 406 for the current candidate counterfactual 404, and the result is fed back (illustrated by arrow 413) to the counterfactual generation process 403 which adapts the mask $m$ accordingly to the computed total loss function 411 and then applies the adapted mask to input image 402, thus modifying the current candidate counterfactual 404.

The final iteration produces a final counterfactual data sample output at 405.

The total loss function 411 in the kth iteration includes a term 407 denoted by $\mathcal{L}_{counterfactual}^k$, a term 409 denoted by $\mathcal{L}_{uncertainty}^k$ and optionally further terms 410 denoted by $\mathcal{L}_{other}^k$, such as e.g. further loss regularizing terms. The total loss function $\mathcal{L}_{total}^k$ 411 in the kth iteration to be minimized is thus given by the following equation:

$$\mathcal{L}_{total}^k = \mathcal{L}_{counterfactual}^k + \mathcal{L}_{uncertainty}^k + \mathcal{L}_{other}^k \tag{4}$$

The term 407 denoted by $\mathcal{L}_{counterfactual}^k$ is a measure for a (sub)loss during the counterfactual generation and can for example be formulated in the following way:

$$\mathcal{L}_{counterfactual}^k = \phi(\sigma(P_k(P_{k-1}(... P_0(I)))), \theta(I)) \tag{5}$$

where I is the input image 402, $P_k$ is the modification of the candidate counterfactual at iteration k, $P_k(P_{k-1}(... P_0(I)))$ is the output of the data generation process 403 in the kth iteration, $\sigma$ is the input to output mapping of model 401 (e.g. the output of a softmax layer) and the function $\phi$ is a chosen loss metric, e.g. a p-norm or a cross-entropy.

The term $\mathcal{L}_{counterfactual}^k$ may therefore in particular be seen as a term comprising the output of the neural network, for example the output of a softmax layer, i.e. the softmax values.

The function $\theta$ is optional, and is a function that returns the counterfactual output for input I, thus a counterfactual target class 408 can be an input to $\mathcal{L}_{counterfactual}^k$ 407. For example if the class car is encoded as [0,1] in the output and the class bike is encoded as [1,0], and the optimization aims to create a bike counterfactual starting from the image of a car (car sample), then $\theta(I) = [1,0]$. The term $\mathcal{L}_{counterfactual}^k$ 407 is thus the counterfactual loss when the counterfactual target class is explicitly given with the function $\theta$. Alternatively, the function $\theta$ can be left out, in case the particular class of the counterfactual is not relevant. Then a counterfactual for a car is for example generated not by forcing the model to mistake it explicitly for a bike, but for any other class comprised in the output Y.

To avoid adversarial masks, or at least reduce them/mitigate their effects, a measure (estimation) of the uncertainty of the neural network in its predictions is introduced as an additional term 409 (uncertainty loss) denoted by

$\mathcal{L}^{k}_{uncertainty}$ in the total loss function 411.

Neural networks traditionally use point estimates, which give a discriminative probability $P(y \mid x; W)$ of class $y$ given input $x$ and weight configuration $W$ as a function of all other possible classes. In other words, the outputs of a neural network represent the probabilities that the input data sample pertains to the respective classes. However, these point estimates are not suitable to be interpreted as a confidence or certainty value, and cannot distinguish whether the root cause of the uncertainty in the class prediction is a property of the data itself, e.g. sensor noise, or a property of the model, e.g. where the model has not been trained on specific types of data which are part of the testing set. In particular, the fact that the classification scores output by the softmax layer of a neural network are not suitable to provide a measure of the confidence of the neural network in its predictions may for example be observed when the neural network outputs classification scores for adversarials, which often have a high classification score despite being misclassified by the network.

Therefore, to obtain a measure of the uncertainty of the neural network in its predictions, uncertainty estimation methods extend point predictions with confidence estimates, i.e. allow a model to accompany a prediction with a measure of how confident the model is of a prediction, and further give a measure of where the uncertainty is coming from, the model or the data.

To this end, a BNN may be used as neural network 401, i.e. a neural network where each weight is modelled as a distribution (usually Gaussian) with a learned mean and variance, is used to provide an uncertainty measure.

In a BNN, the variance of the weight distribution describes the likelihood of observing a given weight and therefore measures uncertainty as distance from the learned mean. The output predictions are also modelled in this way. Finding the weights requires computing a posterior probability $P(W \mid X, Y)$ where X are the training points, Y are the corresponding predictions, and W are the weights we want to find. Computing this posterior probability is usually intractable, as computation of the required term $P(Y|X)$ marginalizes (averages) over all possible weight configurations, which is an intractable task in large neural networks with many weights. However, several methods exist to find (numerical) approximations of this posterior probability.

However, it should be noted that using a BNN is not required for the uncertainty estimation, any network allowing an uncertainty estimation analysis may be used.

For example, in case the neural network 401 uses point estimates, a Monte-Carlo dropout method may be used. For the Monte-Carlo dropout method, the dropout of a certain percentage of the nodes is applied. Thus, the prediction is no longer deterministic, but depends on which nodes are randomly chosen to be kept. Therefore, given a same input image, the model can predict different values each time, i.e. Monte-Carlo dropout may generate different predictions and interprets them as samples from a probabilistic distribution, which is sometimes referred to as Bayesian interpretation.

The first of the above mentioned two types of uncertainty is often referred to as aleatoric uncertainty, which is the uncertainty arising from the noise inherent in the sensor input data sample, e.g. sensor noise or motion noise. Aleatoric uncertainty cannot be reduced even if more data is collected.

The second type of uncertainty is often referred to as epistemic uncertainty, which accounts for the uncertainty in the model parameters, i.e. the quality of the model, and represents what the model cannot predict based on its training data. Epistemic uncertainty can be reduced with more training data, i.e. given infinite training data, epistemic uncertainty would be zero.

It should be noted that using a BNN as classifier allows the output of a predictive distribution as opposed to a point estimate. The uncertainty in the weights of a BNN induces a predictive uncertainty when marginalising over the (approximate) weights posterior distribution. Thus, using a BNN as classifier enables to capture the predictive uncertainty of the neural network.

Aleatoric uncertainty is further differentiated between homoscedastic uncertainty, where the uncertainty remains constant for different inputs, and heteroscedastic uncertainty, where the uncertainty depends on the inputs to the model, with some inputs potentially having more noisy outputs than others, e.g. different regions in a scene having different uncertainties due to occlusions, glare and so on.

Aleatoric uncertainty may also be taken into account in uncertainty measures. This may for example be achieved by putting a distribution over the outputs of the model, for example by adding Gaussian random noise to the outputs, whereby homoscedastic models assume a constant noise for every input point (pixel), while heteroscedastic models assume a varying noise depending on the region/input point (pixel). In non-Bayesian neural networks, the noise parameter is often fixed as part of the model's weight decay, and ignored, but it can be made data-dependent and learned as a function of the data.

The uncertainty term 409 can therefore model (reflect) the epistemic uncertainty contained in the input image, the aleatoric uncertainty contained in the input image, or a combination of both types of uncertainty.

The loss term 409 denoted by $\mathcal{L}^{k}_{uncertainty}$ incorporates an uncertainty measure for the current (intermediary) candidate counterfactual data samples generated via the counterfactual generation process 403. A lower value of the uncertainty term 409 indicates a higher confidence of the neural network 401 in its classification. This means that during the minimization process of the total loss function 411, data samples will be favoured for which the model 401 has a higher confidence in their classification.

This approach therefore discards potentially unwanted or not useful counterfactuals, in particular counterfactuals that were obtained with an adversarial mask, and thus enables obtaining meaningful explanations of how the neural network classifies the images.

The uncertainty term 409 can for example be determined based on a dropout Monte-Carlo approach as mentioned above, where the entirety of the predictions for a single input image 402 may be interpreted as being samples of a probabilistic distribution. The uncertainty term 409 reflects if the distribution has the expected form, e.g. the distribution is expected to be Gaussian, or if it has an unexpected form, e.g. the distribution is expected to be Gaussian but has larger than expected tails.

In the case of a BNN, the uncertainty term 409 can be determined based on the distribution of the predictions, and reflects unexpected forms for the distributions of the predictions.

Further, more complex approaches, such as e.g. the ones described in the above-mentioned paper "What Uncertainties Do We Need in Bayesian Deep Learning for Computer Vision?" by Alex Kendall and Yarin Gal, may be used to determine the uncertainty term 409.

It should be noted that different uncertainty estimates $\mathcal{L}^k_{uncertainty}$ will impose different requirements on the original model 401 with respect to training, architecture and so on.

The total loss function 411 denoted by $\mathcal{L}^k_{total}$ may comprise further (loss) terms 410, such as e.g. further loss regularizing terms.

At the end of the minimization (optimization) process, the final counterfactual is output at 405 by the counterfactual generation system 412.

The counterfactual generation system 412 thus includes the loop for iteratively optimizing the candidate counterfactuals 404 with a counterfactual generation process 403 and with system 406.

The difference between the final counterfactual output at 405 and the original input image 402 can be visualized as a saliency map, highlighting the differences that were necessary at each spatial location in order for the model to produce a different classification, in which the model 401 has a certain (high) degree of confidence.

The counterfactual generation arrangement illustrated by figure 4 further enables to give a reliable measure of how much "energy" is required for a model/neural network to classify a given input differently. This can be a useful metric for model validation and verification purposes. This can further be useful for controlling machines and/or processes.

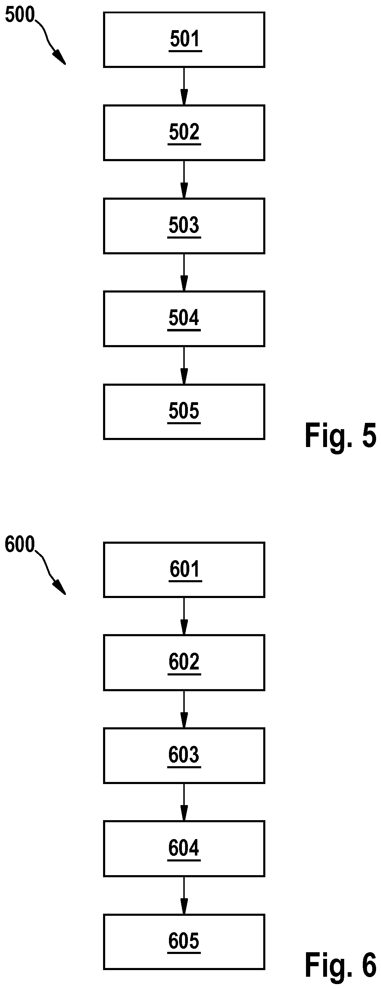

Figure 5 shows a flow diagram 500 illustrating an exemplary method for determining the reliability of results output by a neural network by measuring how much "energy" is required for the model to change the classification of a given input image.

In step 501 several samples, e.g. a batch of samples are used as input for a neural network.

In step 502, the counterfactual generation system illustrated in figure 4 is run for each input sample.

In step 503, for each input sample, the total "energy" required to generate the (final) counterfactual is recorded. For example, the measure of the total "energy" required can be the sum of all the active elements in the (final) optimized mask.

In step 504, statistics for the results of step 503 are computed. For example, mean and variance of the total "energy" are calculated over all (or a part) of the inputs.

In step 505, the computed statistics of step 504, such as mean and variance, are compared against certain criteria, e.g. a predefined threshold for the mean and the variance of the total "energy" required, and a feedback signal, which can take the form of returning individual or several input samples, is provided in case the criteria are not met, e.g. in case the predefined threshold is not met.

In summary, according to various embodiments, a method for generating a counterfactual image data sample for a neural network, based on an input image data sample, is provided as illustrated in figure 6.

In step 601, using the neural network, a class prediction for the input image data sample is determined.

In step 602, a candidate counterfactual data sample for which the neural network determines a different class prediction than for the input image data sample is generated.

In step 603, a loss function is determined, wherein the loss function contains a term representative of the uncertainty of the class prediction by the neural network for the candidate counterfactual data sample.

In step 604, the candidate counterfactual data sample is modified based on the determined loss function to obtain a counterfactual data sample.

In step 605, the counterfactual data sample is output.

According to various embodiments, in other words, a candidate counterfactual data sample is generated and modified based on an optimization process of a loss function, wherein the loss function comprises a term to take into account the predictive uncertainty of the neural network, in other words which takes into account the aleatoric and/or epistemic uncertainty contained in the class prediction of the neural network. The result of the modification of the candidate counterfactual data sample is a counterfactual data sample, which is then output.

It should be noted that "based on an optimization process of a loss function" means that in each iteration the weights and/or other parameters are adapted with the aim of reducing (optimizing) the loss function. The optimization process may only last a certain period of time or for a certain number of iterations, i.e. the optimization problem may only be approximately solved.

The method of figure 6 may be performed by one or more processors. The term "processor" can be understood as any type of entity that allows the processing of data or signals. For example, the data or signals may be treated according to at least one (i.e., one or more than one) specific function performed by the processor. A processor may include an analogue circuit, a digital circuit, a composite signal circuit, a logic circuit, a microprocessor, a central processing unit (CPU), a graphics processing unit (GPU), a digital signal processor (DSP), a programmable gate array (FPGA) integrated circuit or any combination thereof or be formed from it. Any other way of implementing the respective functions, which will be described in more detail below, may also be understood as processor or logic circuitry. It will be understood that one or more of the method steps described in detail herein may be executed (e.g., implemented) by a processor through one or more specific functions performed by the processor.

Therefore, it is intended that this invention be limited only by the claims

## Claims

1. A computer-implemented method (600) for generating a counterfactual image data sample (405) for an image data classification neural network (300, 401) based on an input image data sample (402), comprising:

   • Determining (601), using the neural network, a class prediction for the input image data sample;
   • Generating (602) a candidate counterfactual image data sample (404) for which the neural network determines a different class prediction than for the input image data sample, wherein generating the candidate counterfactual image data sample comprises applying a mask to the input image data sample and wherein modifying the candidate counterfactual image data sample comprises modifying the mask;
   • Determining an estimate of the uncertainty (409) of the class prediction for the candidate counterfactual image data sample, wherein the estimate of the uncertainty is derived from the predictive uncertainty induced by using a Monte-Carlo dropout method or wherein the image data classification neural network is a Bayesian Neural Network, BNN, and the estimate of the uncertainty is derived from the predictive uncertainty induced by the weight probability distributions of the BNN;
   • Determining (603) a loss function (411), wherein the loss function comprises the estimate of the uncertainty (409) of the class prediction by the neural network for the candidate counterfactual image data sample, wherein the loss function comprises a first term (407) containing the output of the neural network for the input image data sample and a second term (409) containing the estimate of the uncertainty of the class prediction for the candidate counterfactual image data sample, wherein the loss function further contains a term representative of the difference between the input image data sample and the counterfactual image data sample, wherein the loss function further contains a term (408) indicating a target class for the counterfactual image data sample to be generated by the neural network;
   • Modifying (604) the candidate counterfactual image data sample to obtain a counterfactual image data sample based on the determined loss function; and
   • Outputting (605) the counterfactual image data sample.

2. The computer-implemented method of claim 1, comprising:
   iteratively generating (403) a sequence of candidate counterfactuals image data samples, wherein, in each iteration, based on the determined loss function, the current candidate counterfactual is either modified to a subsequent candidate counterfactual or the current candidate counterfactual is accepted as the counterfactual image data sample.

3. The computer-implemented method of claim 2, comprising:
   modifying the current candidate counterfactual to a subsequent candidate counterfactual if the determined loss function is above a predetermined threshold and accepting the current candidate counterfactual if the determined loss function is below a predetermined threshold.

4. The computer-implemented method of any one of claims 1 to 3, wherein the neural network is a Bayesian Neural Network, BNN, wherein the estimate of the uncertainty is derived from the predictive uncertainty induced by the weight probability distributions of the BNN.

5. The computer-implemented method of any one of claims 1 to 4, comprising:

   determining the difference between the input image data sample and the counterfactual image data sample;
   storing the determined difference between the input image data sample and the counterfactual image data sample in a storage; and
   controlling a device based on at least the stored difference.

6. A computer-implemented method (500) for determining the reliability of class predictions determined for two or more input image data samples using an image data classification neural network, comprising:

   generating (502) for each input image data sample a counterfactual image data sample using the method of any one of claims 1 to 5;
   determining (503) for each input image data sample a difference between the input image data sample and the corresponding counterfactual image data sample;
   computing (504) at least one statistical information for the determined differences between the input image data samples and the counterfactual image data samples;
   comparing (505) the at least one statistical information against at least one predefined criterion; and
   determining a reliability of class predictions by the neural network based on a result of the comparison.

7. A computer-implemented method of training an image data classification neural network, comprising:

   providing training image data samples of a training dataset;
   training the neural network with the training dataset;
   generating one or more counterfactual image data samples according to any one of claims 1 to 4;
   adding the one or more generated counterfactual image data samples to the training dataset to obtain an augmented training dataset; and
   training the neural network and/or another neural network with the augmented training dataset.

8. A counterfactual generation device configured to perform a method of any one of claims 1 to 7.

**Patentansprüche**

1. Computer-implementiertes Verfahren (600) zum Erzeugen einer kontrafaktischen Bilddatenprobe (405) für ein neuronales Bilddatenklassifizierungsnetzwerk (300, 401) basierend auf einer Eingangsbilddatenprobe (402), umfassend:

   • Bestimmen (601), unter Verwendung des neuronalen Netzwerks, einer Klassenvorhersage für die Eingangsbilddatenprobe;
   • Erzeugen (602) einer kontrafaktischen Kandidatenbilddatenprobe (404), für die das neuronale Netzwerk eine andere Klassenvorhersage als für die Eingangsbilddatenprobe bestimmt, wobei das Erzeugen der kontrafaktischen Kandidatenbilddatenprobe Anwenden einer Maske auf die Eingangsbilddatenprobe umfasst und wobei das Modifizieren der kontrafaktischen Kandidatenbilddatenprobe Modifizieren der Maske umfasst;
   • Bestimmen einer Schätzung der Unsicherheit (409) der Klassenvorhersage für die kontrafaktische Kandidatenbilddatenprobe, wobei die Schätzung der Unsicherheit aus der prädiktiven Unsicherheit abgeleitet wird, die unter Verwendung eines Monte-Carlo-Ausfallverfahrens induziert wird, oder wobei das neuronale Bilddatenklassifizierungsnetzwerk ein Bayessches neuronales Netzwerk, BNN, ist und die Schätzung der Unsicherheit aus der prädiktiven Unsicherheit abgeleitet wird, die durch die Gewichtungswahrscheinlichkeitsverteilungen des BNN induziert wird;
   • Bestimmen (603) einer Verlustfunktion (411), wobei die Verlustfunktion die Schätzung der Unsicherheit (409) der Klassenvorhersage durch das neuronale Netzwerk für die kontrafaktische Kandidatenbilddatenprobe umfasst, wobei die Verlustfunktion einen ersten Term (407), der die Ausgabe des neuronalen Netzwerks für die Eingangsbilddatenprobe enthält, und einen zweiten Term (409), der die Schätzung der Unsicherheit der Klassenvorhersage für die kontrafaktische Kandidatenbilddatenprobe enthält, umfasst, wobei die Verlustfunktion ferner einen Term enthält, der repräsentativ für die Differenz zwischen der Eingangsbilddatenprobe und der kontrafaktischen Bilddatenprobe ist, wobei die Verlustfunktion ferner einen Term (408) enthält, der eine Zielklasse für die kontrafaktische Bilddatenprobe angibt, die durch das neuronale Netzwerk zu erzeugen ist;
• Modifizieren (604) der kontrafaktischen Kandidatenbilddatenprobe, um eine kontrafaktische Bilddatenprobe basierend auf der bestimmten Verlustfunktion zu erhalten; und
• Ausgeben (605) der kontrafaktischen Bilddatenprobe.

2. Computer-implementiertes Verfahren nach Anspruch 1, das Folgendes umfasst:
iteratives Erzeugen (403) einer Sequenz von kontrafaktischen Kandidatenbilddatenproben, wobei in jeder Iteration, basierend auf der bestimmten Verlustfunktion, der aktuelle kontrafaktische Kandidat entweder zu einem nachfolgenden kontrafaktischen Kandidaten modifiziert wird oder der aktuelle kontrafaktische Kandidat als die kontrafaktische Bilddatenprobe akzeptiert wird.

3. Computer-implementiertes Verfahren nach Anspruch 2, das Folgendes umfasst:
Modifizieren des aktuellen kontrafaktischen Kandidaten zu einem nachfolgenden kontrafaktischen Kandidaten, falls die bestimmte Verlustfunktion über einer vorbestimmten Schwelle liegt, und Akzeptieren des aktuellen kontrafaktischen Kandidaten, falls die bestimmte Verlustfunktion unter einer vorbestimmten Schwelle liegt.

4. Computer-implementiertes Verfahren nach einem der Ansprüche 1 bis 3, wobei das neuronale Netzwerk ein Bayessches neuronales Netzwerk, BNN, ist, wobei die Schätzung der Unsicherheit aus der prädiktiven Unsicherheit abgeleitet wird, die durch die Gewichtungswahrscheinlichkeitsverteilungen des BNN induziert wird.

5. Computer-implementiertes Verfahren gemäß einem der Ansprüche 1 bis 4, das Folgendes umfasst:

Bestimmen der Differenz zwischen der Eingangsbilddatenprobe und der kontrafaktischen Bilddatenprobe;
Speichern der bestimmten Differenz zwischen der Eingangsbilddatenprobe und der kontrafaktischen Bilddatenprobe in einer Speicherung; und
Steuern einer Vorrichtung basierend auf mindestens der gespeicherten Differenz.

6. Computer-implementiertes Verfahren (500) zum Bestimmen der Zuverlässigkeit von Klassenvorhersagen, die für zwei oder mehr Eingangsbilddatenproben unter Verwendung eines neuronalen Bilddatenklassifizierungsnetzwerks bestimmt werden, Folgendes umfassend:

Erzeugen (502), für jede Eingangsbilddatenprobe, einer kontrafaktischen Bilddatenprobe unter Verwendung des Verfahrens nach einem der Ansprüche 1 bis 5;
Bestimmen (503), für jede Eingangsbilddatenprobe, einer Differenz zwischen der Eingangsbilddatenprobe und der entsprechenden kontrafaktischen Bilddatenprobe;
Berechnen (504) mindestens einer statistischen Information für die bestimmten Differenzen zwischen den Eingangsbilddatenproben und den kontrafaktischen Bilddatenproben;
Vergleichen (505) der mindestens einen statistischen Information mit mindestens einem vordefinierten Kriterium; und
Bestimmen einer Zuverlässigkeit von Klassenvorhersagen durch das neuronale Netzwerk basierend auf einem Ergebnis des Vergleichs.

7. Computer-implementiertes Verfahren zum Trainieren eines neuronalen Bilddatenklassifizierungsnetzwerks, das Folgendes umfasst:

Bereitstellen von Trainingsbilddatenproben eines Trainingsdatensatzes;
Trainieren des neuronalen Netzwerks mit dem Trainingsdatensatz;
Erzeugen einer oder mehrerer kontrafaktischer Bilddatenproben nach einem der Ansprüche 1 bis 4;
Hinzufügen der einen oder mehreren erzeugten kontrafaktischen Bilddatenproben zu dem Trainingsdatensatz, um einen erweiterten Trainingsdatensatz zu erhalten; und
Trainieren des neuronalen Netzwerks und/oder eines anderen neuronalen Netzwerks mit dem erweiterten Trainingsdatensatz.

8. Kontrafaktische Erzeugungsvorrichtung, die ausgelegt ist zum Durchführen eines Verfahrens nach einem der Ansprüche 1 bis 7.

## Revendications

1. Procédé (600), mis en œuvre par ordinateur, de génération d'un échantillon (405) de données d'image contrefactuelles pour un réseau neuronal (300, 401) de classification de données d'image sur la base d'un échantillon (402) de données d'image d'entrée, comportant les étapes consistant à :

   • Déterminer (601), à l'aide du réseau neuronal, une prédiction de classe pour l'échantillon de données d'image d'entrée ;
   • Générer (602) un échantillon (404) de données d'image contrefactuelles candidates pour lequel le réseau neuronal détermine une prédiction de classe différente de celle relative à l'échantillon de données d'image d'entrée, la génération de l'échantillon de données d'image contrefactuelles candidates comportant l'application d'un masque à l'échantillon de données d'image d'entrée et la modification de l'échantillon de données d'image contrefactuelles candidates comportant la modification du masque ;
   • Déterminer une estimation de l'incertitude (409) de la prédiction de classe pour l'échantillon de données d'image contrefactuelles candidates, l'estimation de l'incertitude étant tirée de l'incertitude prédictive induite en utilisant une méthode de Monte-Carlo avec dropout ou le réseau neuronal de classification de données d'image étant un réseau neuronal bayésien, BNN, et l'estimation de l'incertitude étant tirée de l'incertitude prédictive induite par les distributions de probabilité de poids du BNN ;
   • Déterminer (603) une fonction de perte (411), la fonction de perte comportant l'estimation de l'incertitude (409) de la prédiction de classe par le réseau neuronal pour l'échantillon de données d'image contrefactuelles candidates, la fonction de perte comportant un premier terme (407) contenant la sortie du réseau neuronal pour l'échantillon de données d'image d'entrée et un second terme (409) contenant l'estimation de l'incertitude de la prédiction de classe pour l'échantillon de données d'image contrefactuelles candidates, la fonction de perte contenant en outre un terme représentatif de la différence entre l'échantillon de données d'image d'entrée et l'échantillon de données d'image contrefactuelles, la fonction de perte contenant en outre un terme (408) indiquant une classe cible pour l'échantillon de données d'image contrefactuelles à générer par le réseau neuronal ;
   • Modifier (604) l'échantillon de données d'image contrefactuelles candidates pour obtenir un échantillon de données d'image contrefactuelles basé sur la fonction de perte déterminée ; et
   • Délivrer (605) l'échantillon de données d'image contrefactuelles.

2. Procédé mis en œuvre par ordinateur selon la revendication 1, comportant : la génération itérative (403) d'une suite de échantillons de données d'image contrefactuelles candidates où, à chaque itération, d'après la fonction de perte déterminée, soit le candidat contrefactuel courant est modifié en un candidat contrefactuel subséquent, soit le candidat contrefactuel courant est accepté en tant qu'échantillon de données d'image contrefactuelles.

3. Procédé mis en œuvre par ordinateur selon la revendication 2, comportant : la modification du candidat contrefactuel courant en un candidat contrefactuel subséquent si la fonction de perte déterminée est supérieure à un seuil prédéterminé et l'acceptation du candidat contrefactuel courant si la fonction de perte déterminée est inférieure à un seuil prédéterminé.

4. Procédé mis en œuvre par ordinateur selon l'une quelconque des revendications 1 à 3, le réseau neuronal étant un réseau neuronal bayésien, BNN, l'estimation de l'incertitude étant tirée de l'incertitude prédictive induite par les distributions de probabilité de poids du BNN.

5. Procédé mis en œuvre par ordinateur selon l'une quelconque des revendications 1 à 4, comportant les étapes consistant à :

   déterminer la différence entre l'échantillon de données d'image d'entrée et l'échantillon de données d'image contrefactuelles ;
   stocker la différence déterminée entre l'échantillon de données d'image d'entrée et l'échantillon de données d'image contrefactuelles dans un stockage ; et
   commander un dispositif en se basant au moins sur la différence stockée.

6. Procédé (500), mis en œuvre par ordinateur, de détermination de la fiabilité de prédictions de classe déterminées pour au moins deux échantillons de données d'image d'entrée à l'aide d'un réseau neuronal de classification de données d'image, comportant les étapes consistant à :

générer (502) pour chaque échantillon de données d'image d'entrée un échantillon de données d'image contrefactuelles en utilisant le procédé selon l'une quelconque des revendications 1 à 5 ;

déterminer (503) pour chaque échantillon de données d'image d'entrée une différence entre l'échantillon de données d'image d'entrée et l'échantillon correspondant de données d'image contrefactuelles ;

calculer (504) au moins une information statistique relative aux différences déterminées entre les échantillons de données d'image d'entrée et les échantillons de données d'image contrefactuelles ;

comparer (505) l'information ou les informations statistiques vis-à-vis d'au moins un critère prédéfini ; et

déterminer une fiabilité de prédictions de classe par le réseau neuronal d'après un résultat de la comparaison.

7. Procédé, mis en œuvre par ordinateur, d'entraînement d'un réseau neuronal de classification de données d'image, comportant les étapes consistant à :

fournir des échantillons de données d'image d'apprentissage d'un jeu de données d'apprentissage ;

entraîner le réseau neuronal avec le jeu de données d'apprentissage ;

générer un ou plusieurs échantillons de données d'image contrefactuelles selon l'une quelconque des revendications 1 à 4 ;

ajouter l'échantillon ou les échantillons de données d'image contrefactuelles générés au jeu de données d'apprentissage pour obtenir un jeu de données enrichi d'apprentissage ; et

entraîner le réseau neuronal et/ou un autre réseau neuronal avec le jeu de données enrichi d'apprentissage.

8. Dispositif de génération d'éléments contrefactuels configuré pour réaliser un procédé selon l'une quelconque des revendications 1 à 7.

Fig. 1

EP 3 796 228 B1

Fig. 2

301 302a 302b 303 300

304 305

304 305

304

Fig. 3

EP 3 796 228 B1

**Fig. 4**

EP 3 796 228 B1

500

```
┌──────────────┐
│     501      │
└──────┬───────┘
       │
       ▼
┌──────────────┐
│     502      │
└──────┬───────┘
       │
       ▼
┌──────────────┐
│     503      │
└──────┬───────┘
       │
       ▼
┌──────────────┐
│     504      │
└──────┬───────┘
       │
       ▼
┌──────────────┐
│     505      │
└──────────────┘
```

Fig. 5

600

```
┌──────────────┐
│     601      │
└──────┬───────┘
       │
       ▼
┌──────────────┐
│     602      │
└──────┬───────┘
       │
       ▼
┌──────────────┐
│     603      │
└──────┬───────┘
       │
       ▼
┌──────────────┐
│     604      │
└──────┬───────┘
       │
       ▼
┌──────────────┐
│     605      │
└──────────────┘
```

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SHUSEN LIU et al.** Generative Counterfactual Introspection for Explainable Deep Learning. Cornell University Library, 06 July 2019

- Open Set Learning with Counterfactual Images. **NEAL LAWRENCE et al.** International Conference on financial cryptography and data security (lecture notes in computer science). Springer, 06 October 2018, 620-635